# EUROPÄISCHE PATENTSCHRIFT

(11) **EP 2 637 534 B1**
(45) Veröffentlichungstag und Bekanntmachung des Hinweises auf die Patenterteilung: **29.05.2019**
(21) Anmeldenummer: 11776464.7
(22) Anmeldetag: 02.11.2011
(51) Int. Cl.: A47J 31/36

(54) **HEISSGETRÄNKEZUBEREITUNGSVORRICHTUNG, INSBESONDERE KAFFEEVOLLAUTOMAT, MIT EINER EINRICHTUNG ZUR BEDIENUNGSBESTÄTIGUNG**
HOT BEVERAGE PREPARATION DEVICE, IN PARTICULAR A FULLY AUTOMATIC COFFEE MAKER, COMPRISING A UNIT FOR OPERATION CONFIRMATION
DISPOSITIF DE PRÉPARATION DE BOISSONS CHAUDES, EN PARTICULIER DISTRIBUTEUR ENTIÈREMENT AUTOMATIQUE DE CAFÉ, DOTÉ D'UN ÉQUIPEMENT DE CONFIRMATION D'UNE OPÉRATION

(30) Priorität: 12.11.2010 DE 102010043861
(43) Veröffentlichungstag der Anmeldung: 18.09.2013
(73) Patentinhaber: BSH Hausgeräte GmbH, 81739 München (DE)
(72) Erfinder: BECK, Rudolf, 84518 Garching a. d. Alz (DE); HOECK, Florian, 83334 Inzell (DE); MATHES, Anton, 83364 Neukirchen am Teisenberg (DE); STROBL, Robert, 83246 Unterwössen (DE)
(86) Internationale Anmeldenummer: PCT/EP2011/069246
(87) Internationale Veröffentlichungsnummer: WO 2012/062634

(56) Entgegenhaltungen:
- AU-A1- 2008 202 438
- DE-A1- 2 410 768
- DE-A1-102009 034 945

## Beschreibung

Die Erfindung betrifft eine Heißgetränkezubereitungsvorrichtung, insbesondere einen Kaffeevollautomaten, mit wenigstens einem Bedienmittel zum Bedienen der Heißgetränkezubereitungsvorrichtung, insbesondere zum Ein-/Ausschalten und/oder zur Betriebsprogrammauswahl aus einer Mehrzahl von Betriebsprogrammen zur Zubereitung von Heißgetränken, mit einem Schallemissionen und/oder Vibrationen erzeugenden Aktuator, der in einem Normalbetriebsmodus zur Getränkezubereitung betreibbar ist. Der Aktuator ist ein Bestandteil der Heißgetränkezubereitungsvorrichtung, der aufgrund seiner Betätigung während der Getränkezubereitung, also in seinem Normalbetriebsmodus, Schallemissionen und/oder Vibrationen abgibt, wie beispielsweise ein Mahlwerk zum Mahlen von Kaffeebohnen oder eine Pumpe zur Förderung von Zubereitungswasser.

Bei den meisten Heißgetränkezubereitungsvorrichtungen, wie z. B. Kaffeevollautomaten, erfolgt die Bedienung, d. h. das Ein- und Ausschalten sowie die Programmauswahl zur Zubereitung eines gewünschten Heißgetränks durch das Betätigen von Tastern oder Drehwählern. Taster und Drehwähler haben regelmäßig einen eigenen Druckpunkt, so dass ein Bediener eine haptische Rückmeldung über dessen erfolgreiche mechanische Betätigung erhält. Soweit sie der Bediener aktiv oder unterbewusst wahrnimmt, gibt sie dem Bediener aber u. U. keine Rückmeldung, ob die Betätigung der Taster oder Drehwähler auch z. B. elektrisch erfolgreich war, d. h. seitens des Geräts erkannt wurde. So kann z. B. die Entprellzeit eines Tasters noch nicht erreicht worden sein, um einen geräteseitigen Vorgang auszulösen, obwohl der Bediener subjektiv dieser Meinung ist.

Zur Verbesserung ist es bekannt, dem Bediener z. B. mittels LEDs ggf. zusätzlich eine optische Rückmeldung zu geben. Derartige optische Reize können jedoch auf einen Bediener zeitlich verzögert oder gar nicht wirken, da dieser noch mit dem Betätigen z. B. der Taste beschäftigt ist.

Eine weitere Möglichkeit ist die Verwendung von Summern oder Lautsprechern. Hier ist jedoch stark auf das Sounddesign zu achten, um den Bediener nicht unnötig zu stören. Bei einem unangenehmen oder lästigen Ton schaltet ihn der Bediener unter Umständen - und wenn möglich - ab.

Die AU 2008 202438 A1 offenbart eine Espressomaschine, die mithilfe eines Mehrwegeventils und eines Schalters in verschiedene Modi geschaltet werden kann. Bei den verschiedenen Modi handelt es sich um einen Brühmodus, einen Heißwasser-/Dampf-Bereitstellungsmodus und einen Druckablassmodus.

Die DE 10 2009 034 945 A1 offenbart eine Kaffeemaschine, die über zwei Anwendungsmöglichkeiten verfügt. Die eine Anwendung ist die einer traditionellen Espressomaschine, die andere Anwendung ist die der Produktion einer Portion amerikanischen Kaffees. Die Kaffeemaschine umfasst Schnittstellenmittel für den Benutzer zur Wahl des Espresso respektive des amerikanischen Kaffees.

Die DE 24 10 768 A1 betrifft eine elektromagnetische Pumpe mit axialem Durchfluss, die unabhängig von der Versorgungspannung ist und geräuscharm arbeitet.

Es ist daher Aufgabe der Erfindung, eine Heißgetränkezubereitungsvorrichtung, insbesondere einen Kaffeevollautomaten, mit verbesserter akustischer und/oder haptischer Rückmeldung an einen Bediener bereitzustellen.

Diese Aufgabe wird durch eine Heißgetränkezubereitungsvorrichtung mit den Merkmalen des Anspruchs 1 gelöst.

Bei der erfindungsgemäßen Heißgetränkezubereitungsvorrichtung ist der Aktuator bei Betätigung wenigstens eines der Bedienmittel mindestens in einem Schallemissionen und/oder Vibrationen erzeugenden Sonderbetriebsmodus betreibbar. Die Erfindung wendet sich also davon ab, dem Bediener eine mechanische oder eine durch zusätzliche mechanische oder elektrische Einrichtungen hervorgerufene Rückmeldung auf seine Bedienung zu geben. Sie verfolgt vielmehr das Prinzip, dafür einen ohnehin vorhandenen Aktuator zu verwenden. Als Aktuator kann somit jeder Bestandteil der Heißgetränkezubereitungseinrichtung dienen, der z. B. durch sich im Betrieb bewegende Teile Erschütterungen oder Schall abstrahlt. Dies erlaubt es, dem Bediener auf besonders einfache Weise eine akustische und/oder haptische Rückmeldung zu geben, ohne dass zusätzliche Bauteile hierfür notwendig sind. Durch den Verzicht auf separate Erzeuger für Rückmeldungen reduziert sich der Fertigungsaufwand der Heißgetränkezubereitungsvorrichtung.

Dabei kann sich der Sonderbetriebsmodus vom Normalbetriebsmodus dadurch unterscheiden, das der Aktuator mit unterschiedlichen Ansteuersignalen betrieben wird, die sich z. B. hinsichtlich der Frequenz oder des Zündwinkels unterscheiden, wenn eine Phasenanschnittsteuerung verwendet wird. Es ist aber auch möglich, den Aktuator sowohl im Normal- als auch im Sonderbetriebsmodus mit gleichen Ansteuersignalen zu betreiben, d. h. den Aktuator auf gleiche Art und Weise zu betreiben. Ferner kann vorgesehen sein, dass zwischen einem Betrieb im Normalbetriebsmodus und im Sonderbetriebsmodus eine Pause vorgesehen ist, während der der Aktuator weder im Normalbetriebsmodus noch im Sonderbetriebsmodus betrieben wird, also stillsteht. Damit kann eine eindeutige akustische Unterscheidung zwischen der Betätigung des Aktuators als Erzeuger einer Rückmeldung und dem herkömmlichen Normalbetriebsmodus erreicht werden. Beide Betriebsmodi können ihrerseits zwar durch Stillstandszeiten unterbrochen bzw. rhythmisiert sein. Die Zeitdauer der Pause zwischen dem Normalbetriebsmodus und dem Sonderbetriebsmodus kann jedoch derart bemessen sein, dass sie zumindest größer ist als die Zeitdauer, während der der Aktuator bei Betrieb im Normalbetriebsmodus oder im Sonderbetriebsmodus stillsteht.

Erfindungsgemäß ist auf die Betätigung wenigstens eines Bedienmittels hin der Aktuator zuerst in wenigstens einem Sonderbetriebsmodus und dann nachfolgend in dem Normalbetriebsmodus betreibbar. So wird es möglich, durch akustische und/oder haptische Rückmeldung Betätigungsvorgänge an den Bedienmitteln zu bestätigen, die z. B. der Betriebprogrammauswahl dienen und erfindungsgemäß im Bedienablauf zeitlich vor der eigentlichen Heißgetränkezubereitung liegen. Daneben ist es aber auch möglich, durch einen Betrieb in einem Sonderbetriebsmodus nach dem Normalbetriebsmodus z. B. den erfolgreichen Abschluss einer Heißgetränkezubereitung zu signalisieren oder auch gegebenenfalls einen während der Heißgetränkezubereitung aufgetretenen Fehlerfall einem Bediener anzuzeigen.

In einer weiteren Weiterbildung der Erfindung ist vorgesehen, dass während des Normalbetriebsmodus der Aktuator für eine vorbestimme erste Mindestzeitdauer und während des wenigstens einen Sonderbetriebsmodus für eine vorbestimmte zweite Mindestzeitdauer betreibbar ist, wobei die erste Mindestzeitdauer länger als die zweite Mindestzeitdauer ist. Dabei kann die erste Mindestbetriebsdauer z. B. 100- bis 1000-mal so lang sein wie die zweite Mindestbetriebsdauer. Somit wird die Gesamtbetriebsdauer des Aktuators durch den zusätzlichen Betrieb im Sonderbetriebsmodus nur geringfügig erhöht, so dass keine Auslegung des Aktuators auf eine deutlich erhöhte Gesamtbetriebsdauer erforderlich ist.

Als Aktuator eignet sich jede Komponente einer Heißgetränkezubereitungsvorrichtung, sofern sie bei Betrieb akustisch wahrnehmbare Emissionen und/oder Vibrationen erzeugt, z. B. das Mahlwerk eines Kaffeevollautomaten. Vorzugsweise ist aber vorgesehen, dass die Pumpe zum Fördern von Flüssigkeit, insbesondere von Wasser, als Aktuator ausgebildet ist. Denn sie kann zeitlich besonders genau angesteuert werden, um ein als Rückmeldung geeignetes Signal abzugeben.

Dabei ist in einer bevorzugten Weiterbildung vorgesehen, dass die Pumpe im Normalbetriebsmodus eine größere Flüssigkeitsmenge fördert als im Sonderbetriebsmodus. Hierzu kann z. B. die Pumpe im Sonderbetriebsmodus in einem anderen Arbeitspunkt mit geringerer Förderleistung als im Normalbetriebsmodus betrieben werden, z. B. durch eine entsprechende Ansteuerung des Antriebs. Ferner wirkt sich die Betriebsdauer im Normal- und Sonderbetriebsmodus auf die geförderte Flüssigkeitsmenge aus, insbesondere wenn die Pumpe eine Anlaufphase aufweist, die erst durchlaufen werden muss, bevor sich ein stabiler Betriebszustand der Pumpe mit im Wesentlichen konstanter Förderrate einstellt. So wird die Pumpe im Sonderbetriebsmodus pro Zeiteinheit geringer belastet als im Normalbetriebsmodus, wodurch der zusätzliche Energiebedarf durch den Betrieb im Sonderbetriebsmodus reduziert werden kann. Zugleich wird die mechanische Belastung der Pumpe reduziert und ihre Lebensdauer nicht wesentlich verkürzt.

Als Pumpe können z. B. Kreiselpumpen oder Kolbenpumpen Verwendung finden. Vorzugsweise weist die Pumpe eine Feder und einen zwischen zwei Endlagen beweglich gelagerten Kolben auf, wobei in einer der Endlagen die Feder gespannt ist. Damit erhält die Pumpe einen besonders einfachen, aber robusten Aufbau. Durch eine erste Bewegung des Kolbens von der ersten zur zweiten Endlage wird eine Pumpkammer, in der der Kolben angeordnet ist, mit Flüssigkeit, wie z. B. Wasser, gefüllt. Zugleich wird z. B. die Feder gespannt. Durch eine weitere, entgegensetzte Bewegung des Kolbens von der zweiten in die erste Endlage wird die Flüssigkeit aus der Pumpkammer gedrängt. Vorzugsweise ist der Pumpe ein Elektromagnet zugeordnet, mit dem bei Bestromung des Elektromagneten der Kolben gegen die Kraft der Feder in eine der beiden Endlagen gebracht werden kann.

In einer weiteren vorteilhaften Ausgestaltung der Erfindung kann die Heißgetränkezubereitungsvorrichtung einen ersten Flüssigkeitsführungsweg aufweisen, entlang dem Flüssigkeit während des Normalbetriebsmodus leitbar ist, und einen zweiten Flüssigkeitsführungsweg, entlang dem Flüssigkeit während des wenigstens einen Sonderbetriebsmodus leitbar ist. Dies erlaubt es, auch im Sonderbetriebsmodus den z. B. als Pumpe ausgebildeten Antrieb so anzusteuern, dass sich z. B. eine Förderrate vergleichbar dem Normalbetriebsmodus einstellt, ohne dass es zu einer ungewünschten Zuführung von Flüssigkeit in zur Heißgetränkezubereitung vorgesehenen Komponenten der Heißgetränkezubereitungsvorrichtung, wie z. B. einer Brühkammer, kommt. Somit sind zwei Flüssigkeitsführungswege vorgesehen, von denen der erste dem Normalbetriebsmodus und der zweite dem wenigsten einem Sonderbetriebsmodus zugeordnet ist. Wenn mehr als ein Sonderbetriebsmodus vorgesehen ist, kann allen Sonderbetriebsmodi der zweite Flüssigkeitsführungsweg zugeordnet sein. Ein Ventil an einer Verzweigung zwischen dem ersten und dem zweiten Flüssigkeitsführungsweg sorgt für eine entsprechende Flüssigkeitsführung im Normal- und im Sonderbetriebsmodus. Durch Verbindung mit einer Steuereinrichtung kann das Ventil bei einer Betätigung des Bedienmittels den entsprechenden Flüssigkeitsführungsweg sperren bzw. freigeben.

Der erste Flüssigkeitsführungsweg führt vorzugsweise zu einem Heißgetränkbehälter für das zu erzeugende Heißgetränk und der zweite Flüssigkeitsführungsweg zu einem Sammelbehälter für nicht verwendete Flüssigkeit. Es kann sich bei dem Sammelbehälter im Fall eines Kaffeevollautomaten um eine Tropfschale handeln. Alternativ kann der zweite Flüssigkeitsführungsweg eine flüssigkeitsführende Verbindung zu einem Vorratstank der Heißgetränkezubereitungsvorrichtung zur Bevorratung von Flüssigkeit zur Heißgetränkezubereitung herstellen, so dass eine Wiederverwendung der während des Sonderbetriebsmodus geförderten Flüssigkeit möglich ist. So wird insbesondere sichergestellt, dass die Qualität des Heißgetränks nicht durch vorzeitige und/oder unkontrollierte Zufuhr von Flüssigkeit, wie z. B. nicht ausreichend aufgeheiztem Wasser, beeinträchtigt wird.

Schließlich ist vorzugsweise vorgesehen, dass die Bedienmittel betätigungselementfrei ausgebildet sind. Die Bedienmittel weisen keine beweglich gelagerten Komponenten wie z. B. Schalter oder Taster auf, die beim Schaltvorgang bewegt werden. Z. B. können die Bedienmittel als Touchdisplay oder als Sensortasten ausgebildet sein, die schon auf eine Annäherung oder auf einen Druck eines Fingers eines Bediener reagieren, ohne dass ein Teil der Bedienmittel bewegt werden muss. Dies erlaubt eine mechanisch einfache und optisch besonders ansprechende Gestaltung ohne hervorstehende Schaltelemente. Ferner unterliegen derartige Bedienmittel keiner Alterung, d. h. sie nutzen sich mangels bewegbarer Teile nicht ab. Schließlich ist die Gesamtoberfläche, innerhalb derer die Bedienmittel angeordnet sind, leichter zu reinigen, da sie keine störende Kanten aufweist.

Im Folgenden wird das Prinzip der Erfindung anhand einer Zeichnung beispielshalber noch näher erläutert. In der Zeichnung zeigen:
- Fig. 1: eine schematische Darstellung eines ersten Ausführungsbeispiels einer erfindungsgemäßen Heißgetränkezubereitungsvorrichtung,
- Fig. 2: eine schematische Darstellung eines Antriebs der erfindungsgemäßen Heißgetränkezubereitungsvorrichtung, und
- Fig. 3: ein Ablaufdiagramm verschiedener Betriebszustände bei der erfindungsgemäßen Heißgetränkezubereitungsvorrichtung.

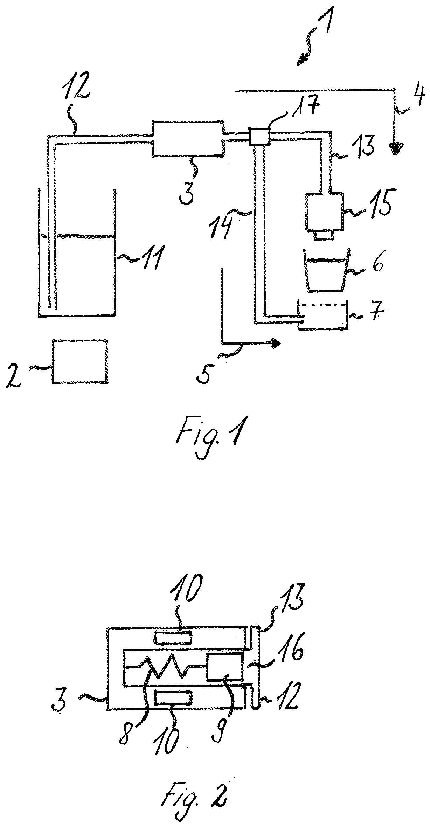

Es wird zunächst auf die Fig. 1 und 2 Bezug genommen. Dargestellt als ein Ausführungsbeispiel für eine Heißgetränkezubereitungsvorrichtung ist ein Kaffeevollautomat 1. Der Kaffeevollautomat 1 weist einen Wassertank 11 auf, der über einen ersten Leitungsabschnitt 12 mit dem im vorliegenden Ausführungsbeispiel als Pumpe 3 ausgebildeten Aktuator flüssigkeitsleitend verbunden ist. Ein zweiter Leitungsabschnitt 13 stellt eine flüssigkeitsleitende Verbindung zu einer Brühkammer 15 zum Aufheizen des Wassers her.

Von dem zweiten Leitungsabschnitt 13 zweigt ein dritter, als Bypass ausgebildeter Leitungsabschnitt 14 ab, der in einem im vorliegenden Ausführungsbeispiel als Tropfschale ausgebildeten Sammelbehälter 7 endet. Somit weist der Kaffeevollautomat 1 einen ersten Flüssigkeitsführungsweg 4 auf, der sich vom Wassertank 11 über den ersten Leitungsabschnitt 12, die Brühkammer 15 und den zweiten Leitungsabschnitt 13 zu einem Heißgetränkebehälter 6 für das zu erzeugende Heißgetränk führt, sowie einen zweiten Flüssigkeitsführungsweg 5 auf, entlang dem Wasser um die Heizkammer Brühkammer 15 herum direkt in den Sammelbehälter 7 geleitet werden kann. Zur wahlweisen Lenkung des Wassers entlang des ersten Flüssigkeitsführungswegs 4 oder zweiten Flüssigkeitsführungswegs 5 ist ein Ventil 17 stromab der Pumpe 3 angeordnet. Es schließt den ersten Flüssigkeitsführungsweg 4, sobald ein Bedienmittel 2 betätigt wird.

Zur Bedienung des Kaffeevollautomaten 1 durch einen Bediener sind Bedienmittel 2 zum Ein- und Ausschalten des Kaffeevollautomaten 1 sowie zur Betriebsprogrammauswahl eines Betriebsprogramms zur Zubereitung eines bestimmten Heißgetränks, wie z. B. Espresso, aus einer Mehrzahl von Betriebsprogrammen zur Zubereitung verschiedener Heißgetränke vorgesehen.

Die Bedienmittel 2 sind als berührungssensitiver Bildschirm bzw. Touchdisplay ohne bewegliches Betätigungselement ausgebildet, sodass der Bediener vom Bedienmittel 2 keine Rückmeldung über dessen Betätigung erhält. Über Leitungen (nicht dargestellt) sind die Bedienmittel 2 mit einer Steuerung (nicht dargestellt) des Kaffeeautomaten 1 verbunden, die durch gezielte Ansteuerung verschiedener Aggregate bzw. Aktuatoren des Kaffeevollautomaten 1 die Zubereitung eines gewünschten Heißgetränks bewirkt. Einer dieser Aktuatoren, der durch Leitungen (nicht dargestellt) mit der Steuerung zur Ansteuerung verbunden ist, ist die Pumpe 3.

Die Pumpe 3 weist eine Pumpkammer 16 auf, in der ein Kolben 9 zwischen zwei Endlagen beweglich gelagert ist. Dabei ist eine Feder 8 so angeordnet, dass die Feder 8 in einer der Endlagen gespannt ist und so den Kolben 9 in die andere Endlage drängt. Um den Kolben entgegen der Federrichtung verlagern zu können, ist ein Elektromagnet 10 vorgesehen, der bei Bestromung, z. B. durch die Steuerung, den Kolben 9 in diese Endlage bringt. Hierzu kann die Steuerung z. B. eine als Gleichrichter wirkende Diode (nicht dargestellt) aufweisen, von der eine Netzhalbwelle gesperrt wird, so dass der Kolben 9 mit der Frequenz der zu Bestromung zur Verfügung stehenden Wechselspannung zwischen den beiden Endlagen hin- und herbewegt wird. Dabei wird im bestromten Zustand der Kolben 9 entgegen der Federkraft der Feder 8 bewegt, so dass sich die Pumpkammer 16 mit Flüssigkeit füllt. Während der nächsten Halbwellen erfolgt keine Bestromung aufgrund der Sperrwirkung der Diode, sodass sich die Feder 8 entspannt und den Kolben 9 in die andere Endlage drängt und damit die Flüssigkeit aus der Pumpkammer 16 fördert. Dabei verhindert ein Rückschlagventil (nicht dargestellt) eine ungewünschte Rückströmung.

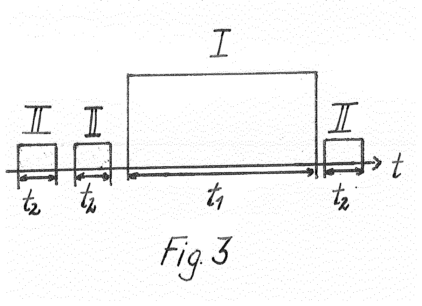

In Fig. 3 Bezug ist ein Ablaufdiagramm eines typischen Bedienvorgangs des Kaffeevollautomaten 1 dargestellt. Ein Bediener schaltet den Kaffeevollautomaten 1 durch Betätigen der als Touchdisplay ausgebildeten Bedienmittel 2 ein. Zur Bestätigung dieses Einschaltvorgangs steuert die Steuerung die Pumpe 3 derart an, dass sie für eine zweite Mindestzeitdauer t2 in dem Sonderbetriebsmodus II betrieben wird, in dem Schallemissionen und/oder Vibrationen erzeugt werden, z. B. mindestens für die Dauer eines Kolbenhubs. Hierzu wird der Elektromagnet 10 der Pumpe 3 bestromt, wobei durch die resultierende Hin- und Herbewegung des Kolbens 9 Wasser gefördert wird, z. B. 20 bis 100 µL. Dabei wird durch eine entsprechende Stellung des Ventils 17 sichergestellt, dass die Flüssigkeit entlang des zweiten Flüssigkeitsführungswegs 5 zum Sammelbehälter 7 geleitet wird.

Es folgt die Auswahl eines bestimmten Betriebsprogramms zur Herstellung eines bestimmten Heißgetränks, wie z. B. Espresso, anhand der Bedienmittel 2. Zur Bestätigung dieser Auswahl seitens der Bediener steuert die Steuerung des Kaffeevollautomaten 1 die Pumpe 3 erneut für die zweite Mindestzeitdauer t2 an, um ihn in dem Sonderbetriebsmodus II zu betreiben, wobei ein zweites Mal Flüssigkeit entlang des zweiten Flüssigkeitsführungswegs 5 zum Sammelbehälter 7 geleitet wird.

Anschließend veranlasst die Steuerung einen Betrieb der Pumpe 3 in dem Normalbetriebsmodus I, während dem während einer ersten Mindestzeitdauer t1 20 bis 150 ml Flüssigkeit, d. h. Wasser, entlang des ersten Flüssigkeitsführungswegs 4 durch entsprechende Ventilstellung zum Heißgetränkebehälter 6 gefördert wird, um das gewünschte Heißgetränk bereitzustellen.

Um den Vorgang der Bereitstellung des gewünschten Heißgetränks abzuschließen und um die Bediener darüber zu informieren, wird abschließend die Pumpe 3 wieder von der Steuerung derart angesteuert, dass die Pumpe 3 im Sonderbetriebsmodus II betrieben wird.

Da es sich bei der vorhergehenden, detailliert beschriebenen Heißgetränkezubereitungsvorrichtung um ein Ausführungsbeispiel handelt, kann sie in üblicher Weise vom Fachmann in einem weiten Umfang modifiziert werden, ohne den Bereich der Erfindung zu verlassen. Insbesondere kann auch die konkrete Ausgestaltung des Aktuators als Schwingkolbenpumpe in anderer Form als in der hier beschriebenen folgen. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Kaffeevollautomat
- 2: Bedienmittel
- 3: Pumpe
- 4: erster Flüssigkeitsführungsweg
- 5: zweiter Flüssigkeitsführungsweg
- 6: Heißgetränkebehälter
- 7: Sammelbehälter
- 8: Feder
- 9: Kolben
- 10: Elektromagnet
- 11: Wassertank
- 12: erster Leitungsabschnitt
- 13: zweiter Leitungsabschnitt
- 14: dritter Leitungsabschnitt
- 15: Heizkammer
- 16: Pumpkammer
- 17: Ventil
- I: Normalbetriebsmodus
- II: Sonderbetriebsmodus
- t1: erste Mindestzeitdauer
- t2: zweite Mindestzeitdauer

## Patentansprüche

1. Heißgetränkezubereitungsvorrichtung, insbesondere Kaffeevollautomat (1), mit einer Steuerung, mit wenigstens einem Bedienmittel (2) zum Bedienen der Heißgetränkezubereitungsvorrichtung, insbesondere zum Ein-/Ausschalten der Heißgetränkezubereitungsvorrichtung und/oder zur Betriebsprogrammauswahl aus einer Mehrzahl von Betriebsprogrammen zur Heißgetränkezubereitung, mit einem Schallemissionen und/oder Vibrationen erzeugenden Aktuator, der in einem Normalbetriebsmodus (I) zur Heißgetränkezubereitung betreibbar ist, wobei die Steuerung dazu eingerichtet ist, den Aktuator bei Betätigung der Bedienmittel (2) mindestens in einem Schallemissionen und/oder Vibrationen erzeugenden Sonderbetriebsmodus (II) anzusteuern, um den Bediener eine Rückmeldung auf seine Bedienung zu geben, **dadurch gekennzeichnet, dass** auf Betätigung wenigstens eines Bedienmittels (2) im Bedienablauf zeitlich vor der eigentlichen Heißgetränkezubereitung der Aktuator zuerst in wenigstens dem einem Sonderbetriebsmodus (II) und dann nachfolgend in dem Normalbetriebsmodus (I) zur Heißgetränkezubereitung betreibbar ist.

2. Heißgetränkezubereitungsvorrichtung nach Anspruch 1, **dadurch gekennzeichnet, dass** während des Normalbetriebsmodus (I) der Aktuator für eine vorbestimme erste Mindestzeitdauer (t1) und während des wenigstens einen Sonderbetriebsmodus (II) für eine vorbestimmte zweite Mindestzeitdauer (t2) betreibbar ist, wobei die erste Mindestzeitdauer (t1) länger als die zweite Mindestzeitdauer (t2) ist.

3. Heißgetränkezubereitungsvorrichtung nach einem der Ansprüche 1 bis 2, **dadurch gekennzeichnet, dass** die Pumpe (3) zum Fördern von Flüssigkeit, insbesondere von Wasser, als Aktuator ausgebildet ist.

4. Heißgetränkezubereitungsvorrichtung nach Anspruch 3, **dadurch gekennzeichnet, dass** die Pumpe (3) im Normalbetriebsmodus (I) eine größere Flüssigkeitsmenge fördert als im Sonderbetriebsmodus (II).

5. Heißgetränkezubereitungsvorrichtung nach Anspruch 3 oder 4, **dadurch gekennzeichnet, dass** die Pumpe (3) eine Feder (8) und einen zwischen zwei Endlagen beweglich gelagerten Kolben (9) aufweist, wobei in einer der Endlagen die Feder (8) gespannt ist.

6. Heißgetränkezubereitungsvorrichtung nach einem der Ansprüche 1 bis 5, **dadurch gekennzeichnet, dass** die Heißgetränkezubereitungsvorrichtung einen ersten Flüssigkeitsführungsweg (4) aufweist, entlang dem Flüssigkeit während des Normalbetriebsmodus (I) leitbar ist, und einen zweiten Flüssigkeitsführungsweg (5) aufweist, entlang dem Flüssigkeit während des wenigstens einen Sonderbetriebsmodus (II) leitbar ist.

7. Heißgetränkezubereitungsvorrichtung nach Anspruch 6, **dadurch gekennzeichnet, dass** der erste Flüssigkeitsführungsweg (4) zu einem Heißgetränkebehälter (6) für das zu erzeugende Heißgetränk führt, und der zweite Flüssigkeitsführungsweg (5) zu einem Sammelbehälter (7) für nicht verwendete Flüssigkeit führt.

8. Heißgetränkezubereitungsvorrichtung nach einem der Ansprüche 1 bis 7, **dadurch gekennzeichnet, dass** die Bedienmittel (2) wenigstens teilweise betätigungselementfrei ausgebildet sind.

## Claims

1. Hot beverage preparation device, in particular fully automatic coffee maker (1), having a controller, having at least one operating means (2) for operating the hot beverage preparation device, in particular for switching the hot beverage preparation device on and off, and/or for operating program selection from a plurality of operating programs for hot beverage preparation, having an actuator generating sound emissions and/or vibrations, which can be operated in a normal operating mode (I) for hot beverage preparation, wherein the controller is designed to activate the actuator on actuation of the operating means (2) at least in one special operating mode (II) generating sound emissions and/or vibrations, in order to give the operator feedback on his/her operation, **characterised in that** on actuation of at least one operating means (2) the actuator can be operated initially in at least the one mode special operating mode (II) and then subsequently in the normal operating mode (I) for hot beverage preparation in the operating sequence at a point in time prior to the actual hot beverage preparation.

2. Hot beverage preparation device according to claim 1, **characterised in that** during the normal operating mode (I) the actuator can be operated for a predetermined first minimum duration (t1) and during the at least one special operating mode (II) for a predetermined second minimum duration (t2), wherein the first minimum duration (t1) is longer than the second minimum duration (t2).

3. Hot beverage preparation device according to one of claims 1 to 2, **characterised in that** the pump (3) for conveying liquid, in particular water, is designed as an actuator.

4. Hot beverage preparation device according to claim 3, **characterised in that** in the normal operating mode (I) the pump (3) conveys a greater quantity of liquid than in the special operating mode (II).

5. Hot beverage preparation device according to claim 3 or 4, **characterised in that** the pump (3) has a spring (8) and a piston (9) movably mounted between two end positions, wherein the spring (8) is tensioned in one of the end positions.

6. Hot beverage preparation device according to one of claims 1 to 5, **characterised in that** the hot beverage preparation device has a first liquid guidance channel (4), along which liquid can be conducted during the normal operating mode (I), and a second liquid guidance channel (5), along which liquid can be conducted during the at least one special operating mode (II).

7. Hot beverage preparation device according to claim 6, **characterised in that** the first liquid guidance channel (4) leads to a hot beverage container (6) for the hot beverage to be produced, and the second liquid guidance channel (5) leads to a collection container (7) for unused liquid.

8. Hot beverage preparation device according to one of claims 1 to 7, **characterised in that** the operating means (2) are designed to be at least partially free from actuating elements.

## Revendications

1. Dispositif de préparation de boissons chaudes, en particulier distributeur entièrement automatique de café (1), avec une commande, avec au moins un moyen de mise en fonctionnement (2) pour la mise en fonctionnement du dispositif de préparation de boissons chaudes, en particulier pour la mise en marche/à l'arrêt du dispositif de préparation de boissons chaudes et/ou pour la sélection d'un programme de fonctionnement parmi une pluralité de programmes de fonctionnement pour la préparation de boissons chaudes, avec un actionneur produisant des émissions sonores et/ou des vibrations qui peut fonctionner dans un mode de fonctionnement normal (I) pour la préparation de boissons chaudes, dans lequel la commande est configurée pour commander l'actionneur au moins dans un mode de fonctionnement spécial (II) produisant des émissions sonores et/ou des vibrations lors de l'actionnement des moyens de mise en fonctionnement (2), afin de donner à l'opérateur une rétroaction sur son opération, **caractérisé en ce que** lors de l'actionnement d'au moins un moyen de mise en fonctionnement (2) au cours de la mise en fonctionnement, avant la préparation proprement dite de boissons chaudes, l'actionneur peut fonctionner d'abord dans l'au moins un mode de fonctionnement spécial (II) et ensuite dans le mode de fonctionnement normal (I) pour la préparation de boissons chaudes.

2. Dispositif de préparation de boissons chaudes selon la revendication 1, **caractérisé en ce que** l'actionneur peut fonctionner pendant une première durée minimale (t1) prédéterminée durant le mode de fonctionnement normal (I) et pendant une deuxième durée minimale (t2) prédéterminée durant l'au moins un mode de fonctionnement spécial (II), dans lequel la première durée minimale (t1) est plus longue que la deuxième durée minimale (t2).

3. Dispositif de préparation de boissons chaudes selon l'une des revendications 1 à 2, **caractérisé en ce que** la pompe (3) pour le refoulement de liquide, en particulier d'eau, est conçue sous la forme d'un actionneur.

4. Dispositif de préparation de boissons chaudes selon la revendication 3, **caractérisé en ce que** la pompe (3) refoule une plus grande quantité de liquide dans le mode de fonctionnement normal (I) que dans le mode de fonctionnement spécial (II).

5. Dispositif de préparation de boissons chaudes selon la revendication 3 ou la revendication 4, **caractérisé en ce que** la pompe (3) comprend un ressort (8) et un piston (9) monté mobile entre deux positions terminales, dans lequel le ressort (8) est tendu dans l'une des positions terminales.

6. Dispositif de préparation de boissons chaudes selon l'une des revendications 1 à 5, **caractérisé en ce que** le dispositif de préparation de boissons chaudes comprend un premier chemin de guidage de liquide (4), le long duquel du liquide peut être dirigé durant le mode de fonctionnement normal (I), et comprend un deuxième chemin de guidage de liquide (5), le long duquel du liquide peut être dirigé durant l'au moins un mode de fonctionnement spécial (II).

7. Dispositif de préparation de boissons chaudes selon la revendication 6, **caractérisé en ce que** le premier chemin de guidage de liquide (4) guide la boisson chaude à produire vers un récipient pour boissons chaudes (6), et le deuxième chemin de guidage de liquide (5) guide le liquide non utilisé vers un récipient de recueil (7).

8. Dispositif de préparation de boissons chaudes selon l'une des revendications 1 à 7, **caractérisé en ce que** les moyens de mise en fonctionnement (2) sont conçus de sorte à être au moins en partie exempts d'élément d'actionnement.
